# EUROPEAN PATENT SPECIFICATION

(11) **EP 4 298 912 B1**
(45) Date of publication and mention of the grant of the patent: **16.07.2025**
(21) Application number: 22182689.4
(22) Date of filing: 01.07.2022
(51) Int. Cl.: A23C 11/06, A23C 11/10, A23C 20/02, A23J 1/08, A23J 1/00, A23J 3/20, C12N 1/06, C12N 1/14, A23L 2/66

(54) **FUNGAL MYCELIUM-BASED MILK OR CREAM SUBSTITUTE**
MILCH- ODER RAHMERSATZ AUF DER BASIS VON PILZMYZELEN
SUBSTITUT DE LAIT OU DE CRÈME À BASE DE MYCÉLIUM FONGIQUE

(43) Date of publication of application: 03.01.2024
(73) Proprietor: Planetary SA, 1223 Cologny Geneva (CH)
(72) Inventor: BRANDES, David, 1223 Cologny (CH); MARISON, Ian, 1026 Echandens (CH); AKINTOYE, Muyiwa, Guisborough, TS14 8EZ (GB)
(74) Representative: KATZAROV S.A.

(56) References cited:
- WO-A1-2020/176758
- WO-A1-2021/234348
- DE-A1- 102016 110 653
- JP-A- H08 149 964
- US-A1- 2004 185 162
- ANONYMOUS: "Mushroom milk: The self-care drink of the future", 21 June 2022 (2022-06-21), XP055963339, Retrieved from the Internet <URL:https://www.en-vols.com/en/taste/mushroom-milk-self-care-drink-of-future/> [retrieved on 20220921]
- DATABASE GNPD [online] MINTEL; 19 August 2021 (2021-08-19), ANONYMOUS: "Mushroom Oatmilk Barista Blend", XP055963325, retrieved from https://www.gnpd.com/sinatra/recordpage/8945492/ Database accession no. 8945492

## Description

### Technical Field

The present invention relates to a process for the production of a milk or cream substitute comprising a filamentous fungus or fungal mycelium material dispersed in water and optionally an oil, which exhibits advantageous properties in terms of stability and sensory attributes. The so obtained milk or cream substitute can advantageously be used to produce substitutes to any food product that can be derived from dairy milk or cream.

### Background Art

There is a growing trend to recognize the negative impact of the dairy industry on climate and environment, due to high water consumption and carbon dioxide emissions caused by bovine breeding. As a result, several environmentally friendly alternatives to dairy products have been developed to solve this problem. In particular, milk substitutes based on plant proteins are now wide-spread and commercially available.

This growing global environment concern results in a growing trend to adopt a vegetarian or vegan diet. It is therefore desirable to provide new vegetarian and vegan formulations, to replace animal-based food products, such as dairy products.

Mycoprotein, in particular fungal mycelium, has also been previously used as alternatives to animal proteins. For example, WO2002/090527A1 discloses an aqueous formulation comprising edible fungal particles consisting substantially of fungal mycelia and having a maximum dimension of less than 200 µm. This particle size is achieved by a subjecting the aqueous formulation to a size reduction process, such as homogenization. The formulation is disclosed as useful in the preparation of foodstuffs, such as yoghurts, desserts or drinks.

DE102016110653A1 discloses food preparations for human or animals which partly consist of mushroom mycelium. An emulsion comprising mycelium, water and sunflower oil is disclosed and referred to as stable.

WO2020/176758A1 discloses liquid dispersion of particles of filamentous fungi that can be used as milk analogs. The size of the fungal filaments is reduced by mechanical means prior to mixing with other ingredients or liquids. The stability of the formulations is at least one day. The storage temperature is not specified.

WO2021234348A1 relates to the production of a milk base used to prepare a liquid milk-like food stuff/formulation comprising micrfluidizing mycoprotein and water.

JP08149964 discloses the preparation of a suspension (slurry) of Basidiomycetes in water in a 1:4 ratio, which can be used to prepare health food.

Mushroom milk: The self-chare drink of the future, published on 21 June 2022 by an anonymous author in the URL https://www.en-vols.com/en/taste/mushroom-milk-self-care-drink-of-furture/ discloses a mushroom milk by Mycolnnovation comprising shiitake mushrooms, water, sunflower oil and sugar cane.

The product "Mushroom Oatmilk Barista Blend" found in the MINTEL database under accession no. 8945492 is a mushroom oatmilk barista blend comprising cordycepts and organic lion's man, oat milk and sunflower oil.

The prior art therefore sets the basis for using aqueous dispersions of filamentous fungi and in particular mycelium as milk substitutes. There is however a need to further improve the properties of these products, in order to make them more suitable for commercial distribution and more attractive to consumers. It is desired, in particular, to improve the stability of the dispersion of the fungal particles in water, such as by increasing the time between the product preparation and the time that the product experiences phase separation and/or coalescence. It is further desired to beneficially modify the sensory attributes of the milk substitute, such as mouthfeel, mouth coating, smoothness, flavour and/or aroma. It is also sought to provide a more long-lasting feeling in the mouth.

It is an object of the present invention to improve the prior art processes to fulfil all or part of the above-mentioned needs.

### Summary of Invention

The present invention provides a process for producing a milk or cream substitute composition comprising:
a) providing a filamentous fungus or a fungal mycelium;
b) creating a slurry by dispersing the filamentous fungus or fungal mycelium in water in amounts such that the solids to water ratio is at the range of 1:4 to 1:40 and mixing;
c) optionally adding an oil and/or one or more other ingredient(s) to the slurry obtained in step b);
d) subjecting the mixture obtained at the end of step b) or c) to a microfluidization step or to a high-pressure homogenization step; and
e) pasteurizing the composition obtained at the end of step d),
wherein the microfluidization or high-pressure homogenization step is performed at a constant pressure of at least 206.8 MPa (30000 psi).

The invention is defined by the appended set of claims.

### Detailed description

The present invention relates to a process for producing a milk or cream substitute. By a milk or cream substitute, it is meant a dispersion comprising non-dairy proteins and non-dairy fat dispersed in water, said dispersion having the appearance of milk or cream and providing a sensory experience upon consumption resembling that of milk or cream. The present milk or cream is preferably vegetarian or vegan, as it can be based solely on fungal and vegetal ingredients.

### Milk or cream replacement substitute obtained from the process of the invention

The milk or cream can consist of a dispersion of a filamentous fungus or a fungal mycelium material in water, wherein the solids to water ratio is in the range of 1:4 to 1:40, and wherein the particle size in the dispersion is of 0.1 to 10 µm.

In a preferred aspect, the particle size is of 0.1 to less than 1 µm and the dispersion is a colloidal dispersion.

The particle size is defined as the mean diameter, defined by weight, as determined by dynamic light scattering. The particle size is advantageously characterized by a narrow particle size distribution. This narrow particle size distribution is beneficial to the stability of the dispersion and to the sensory properties of the product. For example, a broad dispersion would include coarser particles that tend to separate and could even be perceived by the consumer and impair the sensory properties, such as mouthfeel and smoothness of the product.

This specific particle size optimises the dispersion stability, while providing advantageous sensory properties, such as a good mouthfeel, with no mouth coating effect, low astringency, a smooth texture with no grittiness and long-lasting milky/creamy feeling.

In a preferred aspect, the milk or cream substitute has a viscosity at 10°C of 1 to less than 20 cP, preferably 1 to 16 cP, more preferably 1 to 12 cP, or preferably 2 to less than 20 cP, preferably 2 to 16 cP. For a milk substitute, the viscosity is preferably in the range of 1 to 5 cP, preferably 1 to 3 cP, more preferably 2 to 3 cP at 10°C. For a cream substitute, the viscosity is preferably in the range of 6 to 20 cP, preferably 6 to 16 cP, more preferably 8 to 16 cP at 10°C. The viscosity is preferably measured by using a Brookfield rotational viscometer to measure in centipoise.

This viscosity is an important parameter that contributes, with the particle size distribution, to the advantageous sensory properties mentioned above. This viscosity range is advantageously closer to dairy milk and cream viscosities than the prior art mycelium aqueous dispersions. Indeed, the viscosity at 10°C of dairy milk is typically between 2 and 3 cP, depending on the fat content, that of dairy single cream is typically between 8 and 12 cP and that of dairy double cream is typically between 12 and 16 cP. The optimal viscosity of the milk or cream substitutes described herein results from the microfluidization or high-pressure homogenization step in the process of manufacture, as described in details below.

The solids to water ratio is preferably of 1:12 to 1:32. The solids to water ratio typically varies depending on the product type. Preferably, in the case of a milk substitute, the solids to water ratio is 1:24 to 1:40, preferably 1:24 to 1:36, more preferably 1:28 to 1:32. In another aspect, in the case of a cream substitute, the solids to water ratio is 1:4 to 1:20, preferably 1:8 to 1:20, more preferably 1:12 to 1:16.

The mycoprotein is in the form of a filamentous fungus or of a fungal mycelium. Preferably, it is a filamentous fungus or a fungal mycelium belonging to a division selected from the group consisting of Blastocladiomycota, Chytridiomycota, Glomeromycota, Microsporidia, Neocallimastigomycota, Dikarya, Ascomycota, Pezizomycotina, Saccharomycotina, Taphrinomycotina, Basidiomycota, Agaricomycotina, Pucciniomycotina, Ustilaginomycotina, Entomophthoromycotina, Mucor and Kickomycotina. Preferably the filamentous fungus or fungal mycelium belongs to a family selected from the group consisting of Mucoraceae, Ustilaginaceae, Hericiaceae, Polyporaceae, Grifolaceae, Lyophyllaceae, Strophariaceae, Lycoperdaceae, Agaricaceae, Pleurotaceae, Physalacriaceae, Omphalotaceae, Tuberaceae, Morchellaceae, Sparassidaceae, Nectriaceae, Bionectriaceae, Cordycipitaceae, Incertomyae, Meruliaceae, Entolomataceae, Nidulariaceae, Fomitopsidaceae, Phanerochaetaceae, Mycenaceae. Preferably it belongs to a genus selected from Rhizopus, Ustilago, Hericululm, Polyporous, Grifola, Hypsizygus, Calocybe, Pholiota, Calvatia, Agaricus, Stropharia, Hypholoma, Pleurotus, Tuber, Morchella, Sparassis, Fusarium, Disciotis, Clonostachys, Cordyceps, Trametes, Ganoderma, Flammulina, Lentinula, Lucoagaricus, Bjerkandera, Clitopilus, Cyathus, Ischnoderma, Kuehneromyces, Letinula, Lentinus, Macrofungus, Marasmius, Nidula, Ossicaulis, Phanerochaetes, Ossicaulis, Panellus, Postia, Pycnoporus, Tyromyces, Wolfiporia. More preferably, it belongs to a species selected from *Rhizopus oligosporus, Ustilago esculenta, Hericululm erinaceus, Polyporous squamosus,* Polyporus melanopus, *Grifola fondrosa, Hypsizygus marmoreus, Hypsizygus ulmarius, Calocybe gambosa, Pholiota nameko, Calvatia gigantea, Agaricus bisporus, Stropharia rugosoannulata, Hypholoma lateritium, Hypholoma capnoides, Pleurotus eryngii, Pleurotus ostreatus, Pleurotus citrinopiheatus, Pleurotus ostreatus, var. Columbinus, Pleurotus djamor roseus, Pleurotus sapidus, Pleurotus sp. florida, Tuber borchii, Morchella esculenta, Morchella conica, Morchella importuna, Sparassis crispa, Fusarium venenatum, Fusarium oxysporum, Disciotis venosa, Clonostachys rosea, Cordyceps militaris, Trametes versicolor, Ganoderma lucidum, Ganoderma applanatum, Flammulina velutipes, Lentinula edodes, Pleurotus djamor, Pleurotus ostreatus, Lucoagaricus* spp., *Bjerkandera adusta, Clitopilus passeckerianus, Cyathus helenae, Ischnoderma benzoinum, Kuehneromyces mutabilis, Letinula edodes, Lentinus squarrosulus, Macrofungus cohortalis, Marasmius scorodonius, Marasmius scorodonius, Nidula niveo-tomentosa, Phanerochaete chrysosporium, Ossicaulis lignatilis, Panellus serotinus, Postia caesia, Pycnoporus sanguineus, Tyromyces chioneus, Wolfiporia cocos.*

The most preferred genus for the purpose of the present invention is Fusarium, and preferred species is *Fusarium venenatum.*

Unless the milk substitute is a skim milk substitute, the milk or cream substitute further comprises an oil. The oil is preferably a vegetable oil, such as sunflower oil, rapeseed oil, palm oil, soybean oil, coconut oil, corn oil, cottonseed oil, olive oil, safflower oil, or a nut-derived oil. Preferably it is sunflower oil, rapeseed oil, palm oil, coconut oil, cottonseed oil, olive oil or safflower oil. These oils are advantageously sourced from plants that have lower allergenicity. More preferably, it is sunflower oil, rapeseed oil, coconut oil, or safflower oil. These oils are advantageously characterized by a relatively neutral taste and flavour, allowing to obtain a milk or cream substitute having sensory properties closer to dairy milk. Most preferably it is sunflower oil or rapeseed oil. These oils are advantageously characterized by a particularly reasonable life cycle environmental impact compared to other oil.

The amount of oil is adapted, depending on the milk or cream substitute type and is preferably of up to 3% by weight, more preferably 0.5 to 3% by weight, even more preferably 1 to 3% by weight, based on the total weight of the milk or cream substitute.

To adjust the texture, in particular the creaminess and/or heaviness of the milk or cream substitute, the amount of oil is varied within the range mentioned above and variable amounts of hydrocolloid can further be added. This advantageously enables the reduction of the energy content of the product, while providing the desired sensory effect.

The milk or cream substitute optionally comprises other ingredients such as carbohydrates, sweeteners, flavours, salt, hydrocolloids, spices, vitamins, minerals, preservatives, colorants, and the like.

The carbohydrate is preferably at least one sugar, such as sucrose, fructose, dextrose, maltose, arabinose or galactose and the like, or a sugar rich composition, such as corn syrup, agave syrup and the like. Such carbohydrate is preferably present in the milk or cream substitute as a replacement of the lactose naturally present in dairy milk. Sugars also contribute to the pleasant texture and aroma of the milk or cream substitute. Preferably it is sucrose, fructose, dextrose, maltose or arabinose. Most preferably it is sucrose or fructose. The carbohydrate is preferably in the form of white sugar or cane sugar. Sweeteners are typically used instead of sugar in low calories milk substitutes.

Flavours are preferably present in the milk or cream substitute, because it significantly improves the sensory properties of the substitute, making it more similar to dairy milk. The flavour is preferably a milk flavour. More preferably, the flavour is a vegan milk flavour. Other types of flavours can be added, in view of preparing a flavoured milk or cream substitute, such as a fruit flavoured milk or cream substitute.

Salt is preferably present and acts as a flavour and taste enhancer.

Hydrocolloids are preferably present to improve the dispersion stability and or for thickening the composition. A single type of hydrocolloid or a combination of hydrocolloids can be used, such as for example starch, cellulose derivatives, pectin, alginate, carrageenan, gellan, agar or a gum, such as xanthan, guar gum, locust bean gum, gum karaya, gum tragacanth, konjac gum or gum arabic.

Colorants, may also be added to improve the appearance of the milk or cream substitute and to better mimic dairy milk or cream.

The milk or cream substitute may optionally be fortified with nutrients, such as vitamins and minerals, such as to provide additional health benefits to the consumer. For specific nutritional applications, it may therefore be useful to fortify the milk or cream substitute with further minerals and/or vitamins. These nutrients are well-known to the person skilled in the art, and can be added in any suitable amount, in view of the desired health benefit.

Preservatives, such as antibacterial or antifungal agents and antioxidants can be present to avoid spoilage of the milk or cream substitute. Antibacterial or antifungal agents disable the growth of bacteria and mold in the product over time and significantly increase the shelf life of the milk or cream substitute. An antifungal agent does not harm the product quality, as the dispersion does not contain any live fungi. For example, suitable antibacterial or antifungal agents include benzoates, sorbates, propionates, nitrites. Antioxidants reduce oxidation of the nutrients contained in the milk or cream substitute and contributes to maintaining the nutritional quality, appearance and taste of the product over time, thus also increasing the shelf life. Suitable antioxidants include sulfites, such as sodium sulfite, sodium bisulfite, sodium metabisulfite, potassium bisulfite and potassium metabisulfite, tocopherol (vitamin E), ascorbic acid (vitamin C), butylated hydroxyanisole, butylated hydroxytoluene or chelating agents, such as disodium ethylenediaminetetraacetic acid (EDTA), polyphosphates, or citric acid.

### Process

The process of the present invention for producing a milk or cream substitute composition comprises the following steps:
a) providing a filamentous fungus or a fungal mycelium;
b) creating a slurry by dispersing the filamentous fungus or fungal mycelium in water in amounts such that the solids to water ratio is at the range of 1:4 to 1:40 and mixing;
c) optionally adding an oil and/or one or more other ingredient(s) to the slurry obtained in step b);
d) subjecting the mixture obtained at the end of step b) or c) to a microfluidization step or to a high-pressure homogenization step; and
e) pasteurizing the composition obtained at the end of step d),
wherein the microfluidization or high-pressure homogenization step is performed at a constant pressure of at least 206.8 Mpa (30000 psi).

The filamentous fungus or a fungal mycelium is as defined above in the section related to the milk or cream substitute.

The filamentous fungus or fungal mycelium can be provided in the form of a fresh or frozen biomass, or as a dried powder. If it is in the form of a frozen biomass, the filamentous fungus or fungal mycelium is preferably defrosted, more preferably using steam.

The filamentous fungus or fungal mycelium is preferably washed before being processed further. The washing step is preferably performed by resuspending the filamentous fungus or fungal mycelium in water and removing the water, preferably at least two, more preferably at least three times. This step allows to remove any impurities that would be present in the filamentous fungus or fungal mycelium and contributes to the removal of the savoury taste elements of the filamentous fungus or fungal mycelium, by eliminating a range of molecules and minerals.

The filamentous fungus or fungal mycelium is admixed with water at a solids to water ratio of 1:4 to 1:40 and a slurry is formed. The solids to water ratio is essential to obtain a composition sufficiently dilute, such that it can be efficiently subjected to microfluidization or high-pressure homogenization.

The slurry is formed by any method known to the person skilled in the art for making a protein slurry. Typically, the filamentous fungus or fungal mycelium is mixed with water by any suitable means, such as to remove any lumps of the filamentous fungus or fungal mycelium.

The slurry can be heated to remove any astringency and to improve the taste and/or aroma of the milk or cream substitute.

All other ingredients of the milk or cream substitute are then added simultaneously or sequentially to the slurry. These ingredients include an oil and optionally any one or more other suitable ingredient such as disclosed above in the section related to the milk or cream substitute.

These ingredients can advantageously be added all at once to the slurry and be directly subjected to the microfluidization or high-pressure homogenization step. The use of microfludization or high-pressure homogenization in step d) advantageously enables the addition of all ingredients at the same time to the mycoprotein slurry. It also particularly efficiently disperses the oil.

In step d), the filamentous fungus or fungal mycelium water slurry and the additional ingredients are admixed and homogenized by a microfluidization step or a high pressure homogenization step. Microfluidization and high pressure homogenization are both micronization technologies that enable a significant reduction of the particle size in a shorter time and with a significantly smaller number of passes than standard homogenization. These micronization technologies use fluid pressure to apply cavitation force, shear force, turbulence and/or impact force to reduce the particle size of the hyphae of the filamentous fungus or fungal mycelium in the slurry and emulsify the oil. Subjecting the slurry and the additional ingredients to a microfluidization or high pressure homogenization step provides the advantages of a tighter distribution of particles, a smaller particle size, a better reduction of particle size in few passes, increased manufacturing efficiency, reduced manufacturing costs and reduces the need to premix ingredients, thus reducing the number of required processing steps and simplifying the process, which in turns provides for an easier scale up of the process.

In a preferred aspect, the microfluidization or high-pressure homogenization step is performed at a constant pressure of 206.8 to 482.6 MPa (30000 to 70000 psi). A single passing proved sufficient to achieve a stable composition. Performing the microfluidization or high-pressure homogenization step at constant pressure as a single-stage homogenization is particularly advantageous over two-stages homogenization that involves a first high pressure stage and a second low pressure stage. Single-stage homogenization improves for example the stability and sensory properties of the obtained product.

The viscosity typically exhibits a 10-fold reduction after microfluidization or high-pressure homogenization under the above-described conditions, which results from a significant break-up of the hyphae present in the filamentous fungus or fungal mycelium. Microfluidization and high-pressure homogenization advantageously do not impact the pH of the mycoprotein slurry.

In step e) of the present process, the dispersion obtained at the end of the microfluidization or high-pressure homogenization step is pasteurized. Any pasteurization method can be used. Pasteurization techniques are well known to the person skilled in the art. In a preferred aspect, the pasteurization is performed by heating to a temperature of 72°C, holding for about 60s and then rapidly cooling down to 4°C.

The dispersion may then be packaged in any suitable way. Preferably it is hot filled into containers using standard filling methods known in the art and then cooled down and stored to 4°C.

Alternatively, the dispersion may be dried, for example by spray-drying or freeze-drying and filed into containers suitable for powders.

### Food products

The milk or cream substitutes described herein and obtained by the process of the invention can advantageously be used in any food product that is commonly derived from milk or cream or comprises milk or cream. This is in particular the case of a yoghurt, a dessert, a mousse, a cheese spread, a cheese, such as a creamy or hard cheese), an ice-cream, a custard, a porridge, a pudding, a smoothie, a chocolate, an infant formula or a toddler formula or growing-up milk.

Such products can be prepared in the same way as corresponding products comprising dairy milk or cream, by simply replacing in whole or in part the dairy milk or cream by the milk or cream substitute described herein and obtained by the process of the present invention.

### Examples

### Example 1: preparation of a milk substitute by the process according to the invention

*Fusarium venenatum* was provided in the form of a wet and frozen biomass having a solids content of 23% by weight.

The material was steam defrosted.

The wet mycelium paste was washed by re-suspending the biomass in water and removing water. This procedure was performed three times. The washed biomass was admixed to water in respective amounts of 1 part biomass for 7.5 parts water, such as to achieve a solids to water ratio of 1:32. The biomass and water were mixed using a hand mixer until all lumps were dispersed.

The microfluidizer was cleaned, sanitized, primed with water, then the slurried mycelia, sunflower oil, sugar, salt, a vegan dairy flavour and a hydrocolloid were introduced into the receptacle. The pressure was set permanently at 30000 psi and the product was passed once. For each pass through the microfluidizer chamber, approximately 300 gm of the slurry was introduced into the receptacle. The slurry in the receptacle was stirred continuously to prevent settling as it was passed through the machine. The microfluidizer effluent was collected into a beaker. The effluent samples (as shown in Table 1)were pasteurized by heating in a beaker to 72°C as described in the flow chart.

The viscosity of the dispersion was assessed and compared to the viscosity of the slurry before microfluidization. The viscosity reduction was 10-fold, due to a significant reduction in the size of the hyphae.

The pH was measured before and after the microfluidization step and was found not to vary.

The change in temperature before and after Microfluidization was small. Some of this would have been mitigated by the built-in heat exchanger of the microfluidizer machine, which may have hidden the real temperature change

Comparative trials were performed with double pass for each batch of material. In such cases, the effluent material was re-introduced into the receptable and run through the machine a second time, but no significant difference was observed in the properties of the dispersion processed with a single pass and those of the dispersion subjected to a double pass.

## Claims

1. A process for producing a milk or cream substitute comprising:
a) providing a filamentous fungus or a fungal mycelium;
b) creating a slurry by dispersing the filamentous fungus or fungal mycelium in water in amounts such that the solids to water ratio is at the range of 1:4 to 1:40 and mixing;
c) optionally adding an oil and/or one or more ingredient(s) to the slurry obtained in step b);
d) subjecting the mixture obtained at the end of step b) or c) to a microfluidization step or to a high-pressure homogenization step; and
e) pasteurizing the composition obtained at the end of step d),
wherein the microfluidization or high-pressure homogenization step is performed at a constant pressure of at least 206.8 MPa (30000 psi).

2. A process according to claim 1, wherein the microfluidization or high-pressure homogenization step is performed at a constant pressure of 206.8 to 482.6 Mpa (30000 to 70000 psi).

3. A process according to any one of claims 1 or 2, wherein the filamentous fungus or fungal mycelium is washed by resuspending the mycoprotein-rich material in water and removing the water before being mixed with water in step b).

4. A process according to any one of claims 1 to 3, wherein the solids to water ratio is of 1:12 to 1:32.

5. A process according to any one of claims 1 to 4, wherein the filamentous fungus or fungal mycelium belongs to a division selected from the group consisting of Blastocladiomycota, Chytridiomycota, Glomeromycota, Microsporidia, Neocallimastigomycota, Dikarya, Ascomycota, Pezizomycotina, Saccharomycotina, Taphrinomycotina, Basidiomycota, Agaricomycotina, Pucciniomycotina, Ustilaginomycotina, Entomophthoromycotina, Mucor and Kickomycotina,
Preferably belongs to a family selected from the group consisting of Mucoraceae, Ustilaginaceae, Hericiaceae, Polyporaceae, Grifolaceae, Lyophyllaceae, Strophariaceae, Lycoperdaceae, Agaricaceae, Pleurotaceae, Physalacriaceae, Omphalotaceae, Tuberaceae, Morchellaceae, Sparassidaceae, Nectriaceae, Bionectriaceae, Cordycipitaceae, Incertomyae, Meruliaceae, Entolomataceae, Nidulariaceae, Fomitopsidaceae, Phanerochaetaceae and Mycenaceae,
preferably belongs to a genus selected from Rhizopus, Ustilago, Hericululm, Polyporous, Grifola, Hypsizygus, Calocybe, Pholiota, Calvatia, Agaricus, Stropharia, Hypholoma, Pleurotus, Tuber, Morchella, Sparassis, Fusarium, Disciotis, Clonostachys, Cordyceps, Trametes, Ganoderma, Flammulina, Lentinula, Lucoagaricus, Bjerkandera, Clitopilus, Cyathus, Ischnoderma, Kuehneromyces, Letinula, Lentinus, Macrofungus, Marasmius, Nidula, Ossicaulis, Phanerochaetes, Ossicaulis, Panellus, Postia, Pycnoporus, Tyromyces and Wolfiporia,
more preferably belongs to a species selected from *Rhizopus oligosporus, Ustilago esculenta, Hericululm erinaceus, Polyporous squamosus,* Polyporus melanopus, *Grifola fondrosa, Hypsizygus marmoreus, Hypsizygus ulmarius, Calocybe gambosa, Pholiota nameko, Calvatia gigantea, Agaricus bisporus, Stropharia rugosoannulata, Hypholoma lateritium, Hypholoma capnoides, Pleurotus eryngii, Pleurotus ostreatus, Pleurotus citrinopiheatus, Pleurotus ostreatus, var. Columbinus, Pleurotus djamor roseus, Pleurotus sapidus, Pleurotus sp. florida, Tuber borchii, Morchella esculenta, Morchella conica, Morchella importuna, Sparassis crispa, Fusarium venenatum, Fusarium oxysporum, Disciotis venosa, Clonostachys rosea, Cordyceps militaris, Trametes versicolor, Ganoderma lucidum, Ganoderma applanatum, Flammulina velutipes, Lentinula edodes, Pleurotus djamor, Pleurotus ostreatus, Lucoagaricus* spp., *Bjerkandera adusta, Clitopilus passeckerianus, Cyathus helenae, Ischnoderma benzoinum, Kuehneromyces mutabilis, Letinula edodes, Lentinus squarrosulus, Macrofungus cohortalis, Marasmius scorodonius, Marasmius scorodonius, Nidula niveo-tomentosa, Phanerochaete chrysosporium, Ossicaulis lignatilis, Panellus serotinus, Postia caesia, Pycnoporus sanguineus, Tyromyces chioneus* and *Wolfiporia cocos.*

6. A process according to claim 5, wherein the filamentous fungus or fungal mycelium is Fusarium, and preferred species is *Fusarium venenatum.*

7. A process according to any one of claims 1 to 6, wherein the process comprises adding an oil to the slurry.

8. A process according to claim 7, wherein the oil is added to the slurry in an amount of up to 3% by weight, based on the total weight of the milk or cream substitute.

9. A process according to any one of claims 1 to 8, wherein the process comprises adding one or more ingredient selected from carbohydrates, sweeteners, flavours, salt, hydrocolloids, spices, vitamins, minerals, preservatives and colorants to the slurry.

## Patentansprüche

1. Prozess zur Herstellung eines Milch- oder Sahneersatzes, umfassend:
a) Bereitstellen eines Fadenpilzes oder Pilzmyzels;
b) Herstellen einer Suspension durch Dispergieren des Fadenpilzes oder Pilzmyzels in Wasser in solchen Mengen, dass das Feststoff-Wasser-Verhältnis im Bereich von 1:4 bis 1:40 liegt, und Mischen;
c) optionales Zugeben eines Öls und/oder eines oder mehrerer Inhaltsstoff(e) zu der in Schritt b) erhaltenen Suspension;
d) Unterziehen des am Ende von Schritt b) oder c) erhaltenen Gemischs einem Mikrofluidisierungsschritt oder einem Hochdruckhomogenisierungsschritt; und
e) Pasteurisieren der am Ende von Schritt d) erhaltenen Zusammensetzung,
wobei der Mikrofluidisierungs- oder Hochdruckhomogenisierungsschritt bei einem konstanten Druck von mindestens 206,8 MPa (30.000 psi) durchgeführt wird.

2. Prozess nach Anspruch 1, wobei der Mikrofluidisierungs- oder Hochdruckhomogenisierungsschritt bei einem konstanten Druck von 206,8 bis 482,6 MPa (30.000 bis 70.000 psi) durchgeführt wird.

3. Prozess nach einem der Ansprüche 1 oder 2, wobei der Fadenpilz oder das Pilzmyzel gewaschen wird, indem das mykoproteinreiche Material in Wasser resuspendiert und das Wasser entfernt wird, bevor es in Schritt b) mit Wasser gemischt wird.

4. Prozess nach einem der Ansprüche 1 bis 3, wobei das Feststoff-Wasser-Verhältnis 1:12 bis 1:32 beträgt.

5. Prozess nach einem der Ansprüche 1 bis 4, wobei der Fadenpilz oder das Pilzmyzel zu einer Abteilung gehört, die ausgewählt wird aus der Gruppe bestehend aus Blastocladiomycota, Chytridiomycota, Glomeromycota, Microsporidia, Neocallimastigomycota, Dikarya, Ascomycota, Pezizomycotina, Saccharomycotina, Taphrinomycotina, Basidiomycota, Agaricomycotina, Pucciniomycotina, Ustilaginomycotina, Entomophthoromycotina, Mucor und Kickomycotina,
vorzugsweise zu einer Familie gehört, die ausgewählt wird aus der Gruppe bestehend aus Mucoraceae, Ustilaginaceae, Hericiaceae, Polyporaceae, Grifolaceae, Lyophyllaceae, Strophariaceae, Lycoperdaceae, Agaricaceae, Pleurotaceae, Physalacriaceae, Omphalotaceae, Tuberaceae, Morchellaceae, Sparassidaceae, Nectriaceae, Bionectriaceae, Cordycipitaceae, Incertomyae, Meruliaceae, Entolomataceae, Nidulariaceae, Fomitopsidaceae, Phanerochaetaceae und Mycenaceae,
vorzugsweise zu einer Gattung gehört, die ausgewählt wird aus Rhizopus, Ustilago, Hericululm, Polyporous, Grifola, Hypsizygus, Calocybe, Pholiota, Calvatia, Agaricus, Stropharia, Hypholoma, Pleurotus, Tuber, Morchella, Sparassis, Fusarium, Disciotis, Clonostachys, Cordyceps, Trametes, Ganoderma, Flammulina, Lentinula, Lucoagaricus, Bjerkandera, Clitopilus, Cyathus, Ischnoderma, Kuehneromyces, Letinula, Lentinus, Macrofungus, Marasmius, Nidula, Ossicaulis, Phanerochaetes, Ossicaulis, Panellus, Postia, Pycnoporus, Tyromyces und Wolfiporia,
bevorzugter zu einer Spezies gehört, die ausgewählt wird aus *Rhizopus oligosporus, Ustilago esculenta, Hericulum erinaceus, Polyporous squamosus, Polyporus melanopus, Grifola fundrosa, Hypsizygus marmoreus, Hypsizygus ulmarius, Calocybe gambosa, Pholiota nameko, Calvatia gigantea, Agaricus bisporus, Stropharia rugosoannulata, Hypholoma Lateritium, Hypholoma capnoides, Pleurotus eryngii, Pleurotus ostreatus, Pleurotus citrinopiheatus, Pleurotus ostreatus, var. Columbinus, Pleurotus djamor roseus, Pleurotus sapidus, Pleurotus sp. Florida, Tuber borchii, Morchella esculenta, Morchella conica, Morchella importuna, Sparassis Crispa, Fusarium venenatum, Fusarium oxysporum, Disciotis venosa, Clonostachys rosea, Cordyceps militaris, Trametes versicolor, Ganoderma lucidum, Ganoderma applanatum, Flammulina velutipes, Lentinula edodes, Pleurotus djamor, Pleurotus ostreatus, Lucoagaricus spp., Bjerkandera adusta, Clitopilus passeckerianus, Cyathus helenae, Ischnoderma benzoinum, Kuehneromyces mutabilis, Letinula edodes, Lentinus squarrosulus, Macrofungus cohortalis, Marasmius scorodonius, Marasmius scorodonius, Nidula niveo-tomentosa, Phanerochaete chrysosporium, Ossicaulis lignatilis, Panellus serotinus, Postia caesia, Pycnoporus sanguineus, Tyromyces chioneus* und *Wolfiporia cocos.*

6. Prozess nach Anspruch 5, wobei es sich bei dem Fadenpilz oder dem Pilzmyzel um Fusarium handelt und die bevorzugte Spezies *Fusarium venenatum* ist.

7. Prozess nach einem der Ansprüche 1 bis 6, wobei der Prozess Zugeben eines Öls zu der Suspension umfasst.

8. Prozess nach Anspruch 7, wobei das Öl der Suspension in einer Menge von bis zu 3 Gew% bezogen auf das Gesamtgewicht des Milch- oder Sahneersatzes zugegeben wird.

9. Prozess nach einem der Ansprüche 1 bis 8, wobei der Prozess Zugeben eines oder mehrerer Inhaltsstoffe, die aus Kohlenhydraten, Süßstoffen, Aromen, Salz, Hydrokolloiden, Gewürzen, Vitaminen, Mineralien, Konservierungsmitteln und Farbstoffen ausgewählt werden, zu der Suspension umfasst.

## Revendications

1. Procédé de production d'un substitut de lait ou de crème comprenant :
a) fournir un champignon filamenteux ou un mycélium fongique ;
b) créer une bouillie en dispersant le champignon filamenteux ou le mycélium fongique dans l'eau en quantités telles que le rapport solides/eau soit dans la gamme de 1:4 à 1:40 et en mélangeant ;
c) facultativement, ajouter d'une huile et/ou d'un ou plusieurs ingrédient(s) à la bouillie obtenue à l'étape b) ;
d) soumettre le mélange obtenu à la fin de l'étape b) ou c) à une étape de microfluidisation ou à une étape d'homogénéisation à haute pression ; et
e) pasteuriser de la composition obtenue à la fin de l'étape d),
dans lequel l'étape de microfluidisation ou d'homogénéisation à haute pression est effectuée à une pression constante d'au moins 206.8 MPa (30000 psi).

2. Procédé selon la revendication 1, dans lequel l'étape de microfluidisation ou d'homogénéisation à haute pression est réalisée à une pression constante de 206.8 à 482.6 MPa (30000 à 70000 psi).

3. Procédé selon l'une quelconque des revendications 1 ou 2, dans lequel le champignon filamenteux ou le mycélium fongique est lavé en re-suspendant la matière riche en mycoprotéines dans l'eau et en retirant l'eau avant d'être mélangé à l'eau à l'étape b).

4. Procédé selon l'une quelconque des revendications 1 à 3, dans lequel le rapport solides/eau est de 1:12 à 1:32.

5. Procédé selon l'une quelconque des revendications 1 à 4, dans lequel le champignon filamenteux ou le mycélium fongique appartient à une division choisie dans le groupe constitué par les Blastocladiomycètes, les Chytridiomycètes, les Gloméromycètes, les Microsporidies, les Neocallimastigomycètes, les Dikarya, les Ascomycètes, les Pezizomycotina, les Saccharomycotina, les Taphrinomycotina, les Basidiomycètes, les Agaricomycotina, les Pucciniomycotina, les Ustilaginomycotina, les Entomophthoromycotina, les Mucor et les Kickomycotina,
appartient de préférence à une famille choisie dans le groupe composé des Mucoraceae, Ustilaginaceae, Hericiaceae, Polyporaceae, Grifolaceae, Lyophyllaceae, Strophariaceae, Lycoperdaceae, Agaricaceae, Pleurotaceae, Physalacriaceae, Omphalotaceae, Tuberaceae, Morchellaceae, Sparassidaceae, Nectriaceae, Bionectriaceae, Cordycipitaceae, Incertomyae, Meruliaceae, Entolomataceae, Nidulariaceae, Fomitopsidaceae, Phanerochaetaceae et Mycenaceae,
appartient de préférence à un genre choisi parmi Rhizopus, Ustilago, Hericululm, Polyporous, Grifola, Hypsizygus, Calocybe, Pholiota, Calvatia, Agaricus, Stropharia, Hypholoma, Pleurotus, Tuber, Morchella, Sparassis, Fusarium, Disciotis, Clonostachys, Cordyceps, Trametes, Ganoderma, Flammulina, Lentinula, Lucoagaricus, Bjerkandera, Clitopilus, Cyathus, Ischnoderma, Kuehneromyces, Letinula, Lentinus, Macrofungus, Marasmius, Nidula, Ossicaulis, Phanerochaetes, Ossicaulis, Panellus, Postia, Pycnoporus, Tyromyces et Wolfiporia,
appartient de préférence à une espèce sélectionnée parmi *Rhizopus oligosporus, Ustilago esculenta, Hericululm erinaceus, Polyporous squamosus,* Polyporus melanopus, *Grifola fondrosa, Hypsizygus marmoreus, Hypsizygus ulmarius, Calocybe gambosa, Pholiota nameko, Calvatia gigantea, Agaricus bisporus, Stropharia rugosoannulata, Hypholoma lateritium, Hypholoma capnoides, Pleurotus eryngii, Pleurotus ostreatus, Pleurotus citrinopiheatus, Pleurotus ostreatus,* var. *Ancolie, Pleurotus djamor roseus, Pleurotus sapidus, Pleurotus sp. florida, Tuber borchii, Morchella esculenta, Morchella conica, Morchella importuna, Sparassis crispa, Fusarium venenatum, Fusarium oxysporum, Disciotis venosa, Clonostachys rosea, Cordyceps militaris, Trametes versicolor, Ganoderma lucidum, Ganoderma applanatum, Flammulina velutipes, Lentinula edodes, Pleurotus djamor, Pleurotus ostreatus, Lucoagaricus* spp., *Bjerkandera adusta, Clitopilus passeckerianus, Cyathus helenae, Ischnoderma benzoinum, Kuehneromyces mutabilis, Letinula edodes, Lentinus squarrosulus, Macrofungus cohortalis, Marasmius scorodonius, Marasmius scorodonius, Nidula niveo-tomentosa, Phanerochaete chrysosporium, Ossicaulis lignatilis, Panellus serotinus, Postia caesia, Pycnoporus sanguineus, Tyromyces chioneus* et *Wolfiporia cocos.*

6. Procédé selon la revendication 5, dans lequel le champignon filamenteux ou mycélium fongique est Fusarium, et l'espèce préférée est *Fusarium venenatum.*

7. Procédé selon l'une quelconque des revendications 1 à 6, dans lequel le procédé comprend l'ajout d'une huile à la bouillie.

8. Procédé selon la revendication 7, dans lequel l'huile est ajoutée à la bouillie dans une quantité allant jusqu'à 3 % en poids, sur la base du poids total du substitut de lait ou de crème.

9. Procédé selon l'une quelconque des revendications 1 à 8, dans lequel le procédé comprend l'ajout d'un ou de plusieurs ingrédients choisis parmi les glucides, les édulcorants, les arômes, le sel, les hydrocolloïdes, les épices, les vitamines, les minéraux, les conservateurs et les colorants à la bouillie.1
